# EUROPÄISCHE PATENTANMELDUNG

(11) **EP 0 920 896 A1**
(43) Veröffentlichungstag der Anmeldung: **09.06.1999**
(21) Anmeldenummer: 98118686.9
(22) Anmeldetag: 02.10.1998
(51) Int. Cl.: B01D 33/04, B01D 33/64

(54) **Verfahren zum Entwässern einer Faserstoffsuspension**

(30) Priorität: 03.12.1997 DE 19753604
(71) Anmelder: Voith Sulzer Papiertechnik Patent GmbH, 88191 Ravensburg (DE)
(72) Erfinder: Gommel, Axel, 88212 Ravensburg (DE)

(57) **Zusammenfassung**

Das Verfahren dient dem Entwässern von Faserstoffsuspensionen, wobei entweder lediglich die Entfernung von Wasser angestrebt wird oder auch die Wäsche, d.h. das Abtrennen von feinsten Feststoffpartikeln, z.B. Asche aus Altpapiersuspensionen. Die Faserstoffsuspension (S) wird zwischen die beiden Flächen (1, 2) eingeführt und durch Zusammendrücken entwässert. Dabei bewegt sich die zweite Fläche (2) wesentlich langsamer als die erste oder sie steht still. Sie hat eine glatte Oberfläche und ist wasserundurchlässig, so daß die durch Entwässern der Faserstoffsuspension (S) gebildete Schicht (7) problemlos relativ zu ihr bewegt werden kann. Besonders vorteilhaft ist die Ausführung der wasserundurchlässigen Fläche (2) derart, daß ihr Krümmungsradius (R1, R2, R3) in Bewegungsrichtung (A) stetig abnimmt.

## Beschreibung

Die Erfindung betrifft ein Verfahren zum Entwässern einer Faserstoffsuspension gemäß dem Oberbegriff des Anspruchs 1.

Derartige Verfahren werden angewendet, um entweder die Stoffdichte der Faserstoffsuspension zu erhöhen oder um unerwünschte Bestandteile durch Waschen aus der Faserstoffsuspension zu entfernen. Dabei sind beide Vorgänge mehr oder weniger stark miteinander verbunden, denn zum Waschen einer Faserstoffsuspension ist selbstverständlich das Entwässern notwendig. Waschverfahren gehen meist von relativ geringen Anfangsstoffdichten (0,5 - 3 %) aus. Das Ausmaß des Wascheffektes hängt von weiteren Parametern, also nicht nur der Erhöhung der Stoffdichte, ab.

Verfahren zum Entwässern können mit verschiedenen bekannten Vorrichtungen zum Entwässern einer Faserstoffsuspension ausgeführt werden. Die wichtigsten sind Siebpressen verschiedenster Art sowie Filterpressen.

Bei einer Siebpresse wird die Faserstoffsuspension zwischen einem Sieb und einer Walze oder zwischen zwei Sieben eingeführt und zusammengedrückt, so daß ein Teil des Wassers austritt. Das Einfuhren der Suspension erfolgt dabei entweder durch einen Stoffkasten, aus dem die Suspension in den Bereich des Siebes oder der Siebe herausläuft oder durch einen Stoffauflauf, der einen Freistrahl bildet. Aus technischen Gründen, z.B. wegen der Abdichtprobleme, kann der Stoffkasten nicht bei zu dünnen Stoffdichten der Suspension eingesetzt werden. Dann ist ein Stoffauflauf erforderlich.

Obwohl die Verfahren bereits einen hohen Standard erreicht haben, gelingt es oft nicht, den Wascheffekt so zu steuern, wie es gewünscht wird.

Gerade bei niedriger Ausgangsstoffdichte der Faserstoffsuspension (0,5 - 2 %) muß eine große Menge Wasser aus ihr herausgeführt werden, wobei sich die Suspension rheologisch fast wie Wasser verhält. Daher kann ein nur geringer Druck aufgebracht werden, wenn man Probleme, z.B. durch Verdrücken der Schicht oder seitliches Herausspritzen, vermeiden will. Bei zu geringem Druck hingegen ist die Effektivität des Verfahrens ungenügend.

Die maximale Entfernung von Feststoffen ist in vielen Fällen nicht erforderlich oder gar nachteilig. Oft ist eine Mehrzahl von Anforderungen gegeneinander abzuwägen.

Aus der US-PS 5,599,426 ist bekannt, ein Waschverfahren so zu führen, daß das anfallende Filtrat mehrstufig im Gegenstrom zurückgeführt, also der Suspension wieder zugeführt wird. Bekanntlich erhöht die Gegenstromfahrweise die Effektivität von Trennverfahren, ist aber mit befrächtlichem verfahrenstechnischen und apparativen Aufwand verbunden.

Es sind Entwässerungsverfahren bekannt, z.B. aus der WO 96/08600, bei denen ganz bewußt zwischen zwei relativ zueinander bewegten Flächen Reibkräfte erzeugt werden, die so groß sind, daß dadurch eine Röllchenbildung des eingedickten Faserstoffs eintritt. Zur Unterstützung dieses Effektes wird Unterdruck angelegt. Solche Verfahren sind erst bei höheren Stoffdichten betriebssicher durchzuführen.

Der Erfindung liegt die Aufgabe zugrunde, ein Verfahren der eingangs genannten Art zu finden und derart zu gestalten, daß auch mit einer einfachen Vorrichtung eine hohe Entwässerungsleistung erzielt wird.

Diese Aufgabe wird durch das Kennzeichen des Anspruchs 1 erfüllt.

Mit Hilfe der Erfindung ist es möglich, das Verfahren mit Vorrichtungen auszuführen, die nur relativ wenige bewegte Teile benötigen. Auch ist bei relativ geringer Stoffdichte der zugeführten Faserstoffsuspension insgesamt ein guter Entwässerungs- bzw. Auswascheffekt möglich. Bei besonders günstiger Ausgestaltung in der Entwässerungszone kann durch das Zusammenwirken der beiden Flächen der Entwässerungsdruck auf die jeweils an dieser Stelle herrschenden Stoffverhältnisse optimal abgestimmt werden. Insbesondere ist es möglich, bei der noch sehr dünnflüssigen Suspension zu Beginn des Vorganges einen geringen Entwässerungsdruck und mit zunehmender Stoffdichte einen höheren Entwässerungsdruck zwischen beiden Flächen zu erzeugen. Besondere Vorteile bietet die Erfindung, wenn in der erwähnten Entwässerungszone nur Stoffdichten auftreten, die unter 8 % liegen. In diesem Fall besitzt die Faserstoffsuspension genügend Schmierfähigkeit, d.h. an der Grenzfläche zwischen der Schicht und der Fläche, an der diese Schicht vorbeibewegt wird, entsteht infolge des Wassers nur eine geringe Reibkraft. Die Faserschicht gleitet auf der Fläche, und die auftretenden Scherkräfte bewirken lediglich eine gewisse Auflockerung, ohne die Schicht zu zerstören. Eine Verschmutzung durch Ablagerungen ist nicht zu befürchten. Auch ist der Siebverschleiß sehr gering. Die Fläche kann mit Vorteil sehr glatt, z.B. poliert sein. Es ist auch eine abweisende und/oder reibkraftmindernde Beschichtung, wie z.B. Teflon oder Keramik, von Vorteil.

Es hat sich gezeigt, daß das Verfahren bei relativ geringer Dicke der Suspensionsschicht besonders günstig abläuft. Sehr gute Ergebnisse werden erzielt, wenn diese Schicht einem Blattgewicht von höchstens 200 g/m² atro entspricht. Dennoch kann die Durchsatzmenge hoch sein, da relativ hohe Geschwindigkeiten ohne Nachteil möglich sind.

Das erfindungsgemäße Verfahren bietet in weiterer Ausgestaltung die Möglichkeit, einen Teil des bereits erhaltenen Filtrates in den Faserstoff zurückzuführen. Dabei wird diese an sich bekannte Filtratrückführung in besonders vorteilhafter Weise möglich gemacht, nämlich durch Zugabe auf der der durchlässigen Fläche gegenüberliegenden Seite der bereits gebildeten Schicht. Dabei kann für das Filtrat eine Zugabestelle gewählt werden, an der die Faserstoffschicht schon einen gewissen Filtereffekt für das aufgebrachte Filtrat erbringen kann. Das Filtrat muß die Schicht erst durchdringen, bevor es wiederum austreten kann. Auf diesem Wege durch die Schicht werden gerade die erwünschten Bestandteile des zurückgeführten Filtrates festgehalten. Es hat sich gezeigt, daß das 1. Filtrat neben den anorganischen Feststoffen auch eine relativ große Menge von Organischem enthält. Das sind besonders die Faserfeinstoffe und Faserbruchstücke, die einen Beitrag zur Blattfestigkeit bringen. Nach Rückführung und erneuter Zugabe gemäß der Erfindung gelangen diese Stoffe an eine Stelle der bereits eingedickten Faserstoffschicht, von der aus das Wasser durch diese erst hindurchfließen muß, bevor es die durchlässige Fläche, z.B. das Sieb, erreicht hat. Dabei bleiben die Faserbruchstücke aufgrund ihrer Größe und Affinität zum übrigen Faserstoff hängen, gehen also nicht mehr in das Filtrat.

Mit Hilfe des erfindungsgemäßen Verfahrens ist es also möglich, im Bedarfsfall einen großen Teil der unbeabsichtigt ausgewaschenen Feststoffe dem Faserstoff wieder zuzuführen.

Die Erfindung wird erläutert anhand von Zeichnungen. Dabei zeigen:
- Fig. 1: erstes Schema zur Durchführung des Verfahrens;
- Fig. 2: Verfahren gemäß Fig. 1 mit einigen zusätzlichen Details;
- Fig. 3 - 6: jeweils Variationen des Verfahrens;
- Fig. 7: schematisch: Eine Vorrichtung zur Durchführung des Verfahrens;
- Fig. 8-11: weitere Vorrichtungsvarianten.

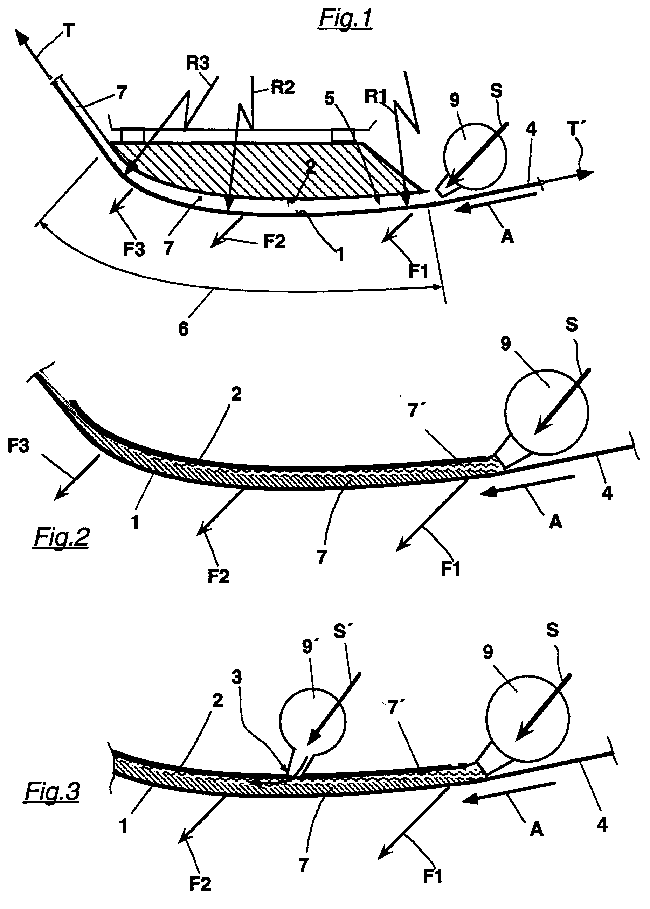

Fig. 1 stellt im wesentlichen die erste Fläche 1 und die zweite Fläche 2 dar, wobei diese Flächen so angeordnet sind, daß sich ein konvergierender Entwässerungsspalt 5 mit einer gebogene Entwässerungszone 6 bildet. Die Flächen 1 und 2 sind in Seitenansicht angedeutet. Dabei liegt die erste Fläche 1 auf einem nur teilweise gezeichneten endlosen Siebband. Bei dem hier gewählten Beispiel steht die zweite Fläche 2 still, während das Siebband 4 in Bewegungsrichtung A relativ zur zweiten Fläche 2 bewegt wird. Durch die Siebspannung (Pfeile T, T') wird das Siebband 4 gegen eine gewölbte Fläche, hier die zweite Fläche 2, angedrückt. Dadurch entsteht zwischen den beiden Flächen 1 und 2 ein Druck, mit dessen Hilfe die Faserstoffsuspension entwässert werden kann. Die Entwässerung wird hier durch Fliehkraft unterstützt, da sie radial nach außen erfolgt. Vorteilhafterweise ist die zweite Fläche 2 so gestaltet, daß die gegen sie angedrückte erste Fläche 1 eine Form mit unterschiedlichen Krümmungsradien R1, R2, R3 einnimmt. Die Krümmungsradien nehmen dabei in Bewegungsrichtung A ab, d.h. die Krümmung wird stärker. In der Figur sind lediglich drei Krümmungsradien R1, R2, R3 gezeichnet. Bekanntlich nimmt der Druck zwischen den Flächen mit abnehmendem Krümmungsradius zu. Der relativ große anfängliche Krümmungsradius R1 führt zu einer schonenden Vliesbildung, wodurch die erwünschte Retention der Faserstoffe verbessert wird.

In den konvergierenden Entwässerungsspalt 5 wird mit Hilfe eines Stoffauflaufes 9 die Faserstoffsuspension S, z.B. in Form eines Flachstrahles, eingespritzt. Da die erste Fläche 1 wasserdurchlässig ist, tritt Filtrat F1, F2, F3 durch diese hindurch. Die zurückbleibende Faserstoffsuspension wird eingedickt, so daß sich eine Schicht 7 bildet, die auf der ersten Fläche 1 transportiert wird. Die Figuren zeigen die Größenverhältnisse nicht maßstabsgerecht. Sie soll lediglich die erforderlichen Schritte bei Durchführung des erfindungsgemäßen Verfahrens deutlich machen.

Die Fig. 2 geht etwas detaillierter auf die Verhältnisse im Verfahrensschema der Fig. 1 ein. Insbesondere sind hier die Zustände der durch den Stoffauflauf 9 zugegebenen Faserstoffsuspension S in ihren verschiedenen Stadien schematisch dargestellt. Man erkennt eine Schicht 7, welche sich auf der ersten Fläche 1 befindet und von dieser in Bewegungsrichtung A transportiert wird. Diese Schicht 7 ist bereits vorentwässert, so daß sie eine gewisse Struktur aufweist. Zwischen der Schicht 7 und der zweiten Fläche 2 befindet sich eine Suspensionsschicht 7', welche mehr Wasser als die Schicht 7 enthält. Da die zweite Fläche 2 im Gegensatz zur ersten Fläche 1 wasserundurchlässig ist, bleibt in ihrer unmittelbaren Nachbarschaft die zugegebene Faserstoffsuspension S tendenzmäßig feuchter als die auf der Gegenseite, also in Nachbarschaft der ersten Fläche 1 befindliche. So wie es in der Fig. 2 dargestellt ist, handelt es sich um eine Modellvorstellung, insbesondere was die jeweilige Dicke und die Grenze zwischen den beiden Schichten betrifft. Als Folge dieser Unterschiede im Wassergehalt ergeben sich die bereits erwähnten günstigen Verhältnisse bei der Bewegung der bewegten Schicht 7 entlang der feststehenden zweiten Fläche 2. Da die Suspensionsschicht 7' als nasse Schmierschicht dient, kann die Reibung gering bleiben. Störungen in der bereits strukturierten und als Filterhilfsschicht benötigten Schicht 7 werden vermieden.

Die Erfindung bietet die Möglichkeit, mit einfachen Mitteln mehrschichtig zu arbeiten, indem, wie die Fig. 3 zeigt, weitere Suspension S' durch einen weiteren Stoffauflauf 9' zugegeben wird. Das kann vorzugsweise in der Entwässerungszone 6 durch die zweite Fläche 2 hindurch geschehen. Gemäß Fig. 3 wird bei entsprechender Wahl der Betriebsparameter die weitere Faserstoffsuspension S' direkt in die dünnflüssige Suspensionsschicht 7' eingeleitet, und zwar so, daß die bereits gebildete Schicht 7 nicht aufgerissen wird. Wie bereits erwähnt, kann an dieser Stelle mit Vorteil das erste Filtrat F1 in die Faserstoffschicht zurückgeführt werden. Diese Fahrweise steigert die Ausbeute und fordert die Selektivität der Wäsche.

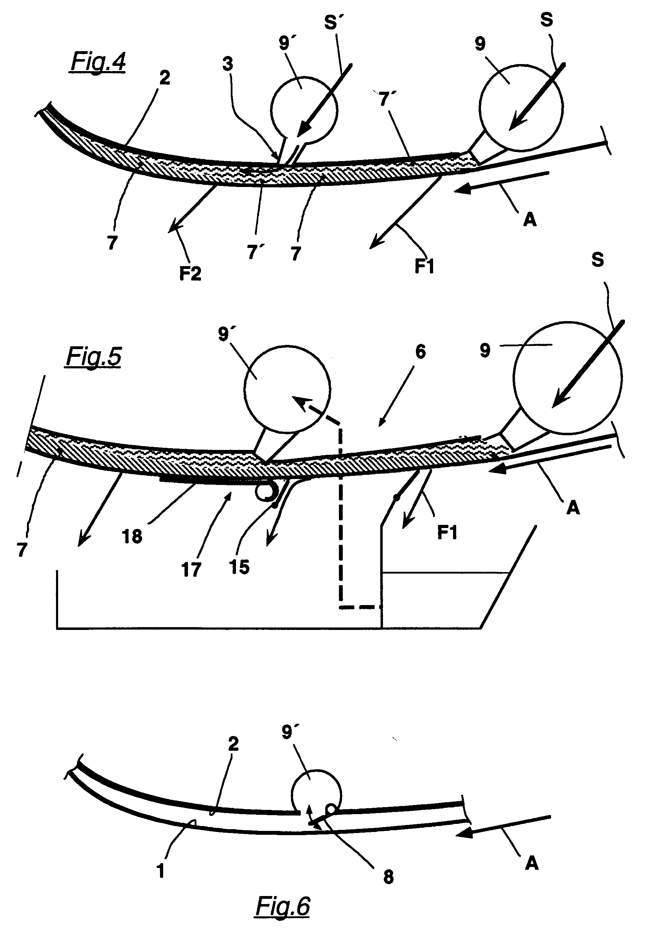

In anderen Fällen kann es gerade gewünscht sein, die mit dem weiteren Stoffauflauf 9' zugegebene Faserstoffsuspension mit der bereits gebildeten Schicht 7 stark zu vermischen, so daß auch aus der zugegebenen Faserstoffsuspension möglichst viele Feststoffpartikel ausgewaschen werden. In solchen Fällen kann durch Turbulenzen, die sich sehr einfach mit entsprechender Geschwindigkeit am Stoffauflauf 9' herstellen lassen, dieses Ziel erreicht werden. Also kann je nach Anforderungen das Verfahren so durchgeführt werden, daß ein geringerer Auswascheffekt (gemäß Fig. 3) oder ein stärkerer (gemäß Fig. 4) eingestellt wird.

In den o.g. Fällen, in denen also zu der bereits im Entwässerungsspalt befindlichen Suspension S weitere Flüssigkeit zuzuführen ist, bietet sich bei Durchführung des Verfahrens eine besonders vorteilhafte Möglichkeit. Infolge der Bewegung, welche die Faserstoffsuspension zusammen mit einer der beiden Flächen, z.B. mit dem Siebband 4 ausführt, kann ein Unterdruck erzeugt werden, der sich bei der Zugabe der weiteren Flüssigkeit nutzen läßt. Man kann das auch als eine besondere Form des Injektorprinzips bezeichnen. Der erzielbare Unterdruck hängt von den geometrischen Verhältnissen und der Relativgeschwindigkeit zwischen der Faserstoffsuspension und dem zweiten Stoffauflauf 9' ab. Eine zusätzliche Maßnahme, um den Unterdruck zu erhöhen, zeigt die Fig. 5, bei der im Bereich des zweiten Stoffauflaufes 9' sich der Raum zwischen der ersten und der zweiten Fläche erweitert. Je nach vorliegenden Verhältnissen kann die Druckabsenkung (nach Bernoulli) im Bereich der Strömungserweiterung so stark sein, daß die Flüssigkeit in den Stoffauflauf 9' nicht hineingepumpt werden muß, sondern selbsttätig angesaugt wird. Das kann ein Vorteil sein, wenn z.B. an dieser Stelle das im offenen Filtratbehälter gesammelte erste Filtrat F1 wieder zugeführt werden soll. Eventuell ist es sinnvoll, an der wasserdurchlässigen Fläche, also hier dem Siebband 4, eine Dichtvorrichtung 17 so anzubringen, daß sie das Ansaugen von Luft, bzw. das Zurücksaugen von Wasser, in die Faserstoffschicht hinein verhindert. Diese Dichtvorrichtung kann ein flexibles undurchlässiges Band 18 enthalten.

Wie Fig. 6 zeigt, kann die Zuflußstelle auch mit einer einstellbaren Klappe 8 versehen sein, mit der die Strömungs- und Druckverhältnisse beeinflußbar sind.

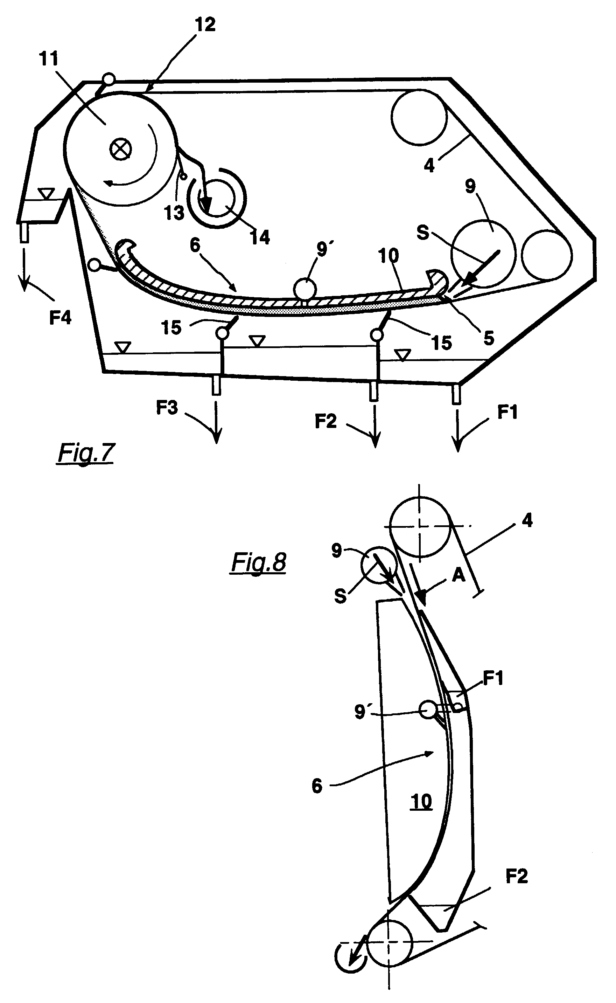

In Fig. 7 ist in vereinfachter Form eine Entwässerungsvorrichtung dargestellt, mit der das erfindungsgemäße Verfahren durchführbar ist. Bei dieser Vorrichtung befindet sich die zweite Fläche auf einem gewölbten Gleitschuh 10, der hier in einer im wesentlichen horizontalen Position raumfest angebracht ist. Die erste Fläche gehört zu dem umlaufenden Siebband 4 und wird durch hier nicht gezeigte Spannvorrichtungen von unten gegen den Gleitschuh 10 angedrückt. Die Suspension S gelangt über einen Stoffauflauf 9 in den sich bildenden konvergierenden Entwässerungsspalt 5. Die Entwässerungszone 6 befindet sich zwischen dem Siebband 4 und dem Gleitschuh 10. Nachdem die Faserstoffsuspension die Entwässerungszone 6 passiert hat, wird sie vom Siebband 4 zu einer Entwässerungswalze 11 transportiert, auf der sie infolge des durch die Siebspannung erzeugten Druckes weiter entwässert wird. Zweckmäßigerweise ist der Krümmungsradius der Entwässerungswalze 11 kleiner als der Krümmungsradius des Gleitschuhs 10, weil dadurch der Entwässerungsdruck weiter gesteigert werden kann. An der Trennstelle 12 zwischen Siebband 4 und Entwässerungswalze 11 bleibt die eingedickte Faserstoffsuspension an der Entwässerungswalze 11 haften, wird durch einen Schaber 13 von dieser abgenommen und mit einer Austragsvorrichtung 14 aus der Vorrichtung entfernt. Die Entwässerungswalze 11 läuft in der Regel mit dem Siebband 4 mit oder treibt es an, sie kann aber auch eine Relativgeschwindigkeit zum Siebband haben, insbesondere feststehen.

Das bestimmungsgemäß aus der Faserstoffsuspension ausgedruckte Wasser gelangt als Filtrat in entsprechende Auffangstellen, wobei in dem hier gezeigten Falle vier verschiedene Filtratqualitäten F1 bis F4 gewonnen werden. Wenn das Filtrat nicht oder nur ungenügend abgeschleudert wird, können Abstreifer 15 gegen das laufende Siebband 4 angestellt werden. Die Art der Aufteilung in verschiedene Filtratqualitäten bleibt dem Fachmann vorbehalten und richtet sich nach den Anforderungen an das Verfahren. Man erkennt bei dieser Vorrichtung ferner einen zweiten Stoffauflauf 9', der so angeordnet ist, daß aus ihm durch den Gleitschuh 10 hindurch entweder weitere Suspension oder ein Filtrat, z.B. das erste Filtrat F1, in die Entwässerungszone 6 eingeleitet werden kann. Die damit verbundenen Mechanismen und Möglichkeiten sind bereits anhand der Figuren 2 bis 4 erläutert worden.

Die Fig. 8 zeigt den Teil einer Vorrichtung zur Durchführung des Verfahrens, bei der die Bewegungsrichtung A im wesentlichen einen abwärts gerichteten Verlauf hat. Bei einer solchen Anordnung wird die Zugabe der Suspension S in die Entwässerungszone 6 erleichtert. Auch läßt sich die bereits erwähnte Selbstansaugung vom ersten Filtrat F1 besonders einfach ermöglichen. Die eingedickte Suspension wird hier ohne weitere Pressung von dem Siebband 4 abgenommen.

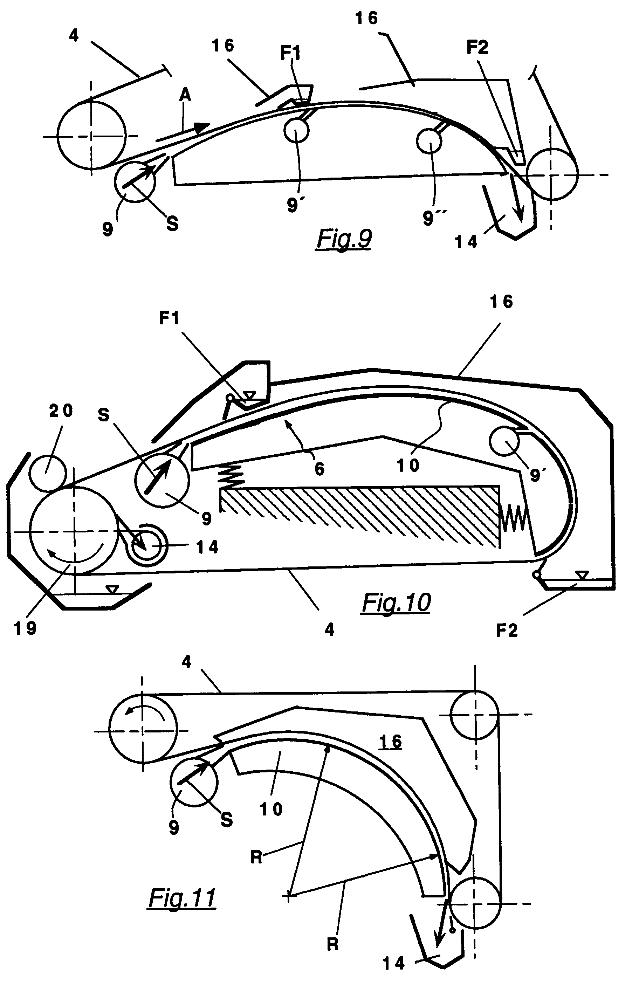

Eine andere Strömungsführung zeigt die Fig. 9. Das Filtrat F1 und F2 gelangt in Auffangbehälter 16, die oberhalb der Entwässerungszone liegen. Bei der Filtratabführung können Abstreifer notwendig sein. Diese Vorrichtung enthält auch einen dritten Stoffauflauf 9''. Das ermöglicht einen höheren Durchsatz.

Die Vorrichtung zur Durchführung des Verfahrens gemäß Fig. 10 enthält einen relativ langen Bereich, in dem das Siebband 4 gegen einen Gleitschuh 10 gedrückt wird, der in diesem Falle federnd abgestutzt ist. Die so gebildete Entwässerungszone 6 beginnt mit einem ansteigenden Teil, dem ein im wesentlichen horizontaler Bereich folgt und setzt sich fort, bis der Verlauf des Siebbandes fast vollständig umgelenkt ist. Es läuft dann zurück zur Umlenkwalze 19, an welcher aufgrund der Siebspannung weiter entwässert wird. Wenn sie gleichzeitig als Antriebswalze genutzt wird, konnte eine Gegenwalze 20 zweckmäßig sein. Dann läßt sich die Siebspannung erforderlichenfalls gering halten, und eine Blockierung in der relativ langen Entwässerungszone wird vermieden. Der Krümmungsradius nimmt im Verlauf der Bewegungsrichtung A beträchtlich ab, was - wie bereits erwähnt - den Entwässerungsdruck allmählich erhöht. Mit Vorteil ist der Radius der Umlenkwalze 19 kleiner als der minimale Krümmungsradius am Gleitschuh 10.

Die Figuren 1 bis 10 zeigen solche Formen der zweiten Fläche 2, bei der die Krümmungsradien, in Bewegungsrichtung A betrachtet, stetig abnehmen.

Die Variante gemäß Fig 11 ist dagegen mit konstantem Krümmungsradius R versehen, also als zylindrische Fläche gestaltet. Dadurch läßt sich die Vorrichtung weiter vereinfachen; die Entwässerungswirkung setzt schneller ein.

## Patentansprüche

1. Verfahren zum Entwässern einer Faserstoffsuspension (S),
welches durchgeführt wird zwischen einer zweiten Fläche (2) und einer relativ dazu in Bewegungsrichtung (A) bewegten ersten Fläche (1),
die zusammen einen konvergierenden Entwässerungsspalt (5) bilden, in den die Faserstoffsuspension (S) eingeführt wird,
dem sich eine gewölbte Entwässerungszone (6) anschließt,
wobei mindestens eine der beiden Flächen (1,2) wasserdurchlässig ist,
wobei eine der beiden Flächen (1,2) den zugeführten Faserstoff als Schicht (7) transportiert,
**dadurch gekennzeichnet**,
daß die zweite Fläche (2), die langsamer als die erste Fläche (1) bewegt wird oder stillsteht, eine glatte Oberfläche hat und wasserundurchlässig ist.

2. Verfahren nach Anspruch 1,
**dadurch gekennzeichnet**,
daß die zweite Fläche (2) in Bewegungsrichtung (A) einen abnehmenden Krümmungsradius (R1, R2, R3) hat.

3. Verfahren nach Anspruch 1 oder 2,
**dadurch gekennzeichnet**,
daß der Krümmungsradius (R1, R) am Beginn des Entwässerungsspaltes (5) mindestens 2 m beträgt.

4. Verfahren nach Anspruch 1, 2 oder 3,
**dadurch gekennzeichnet**,
daß die zweite Fläche (2) von einem gewölbten feststehenden Gleitschuh (10) gebildet wird und die erste Fläche (1) Teil eines Siebbandes (4) ist, welches gegen die zweite Fläche (2) angedrückt wird.

5. Verfahren nach Anspruch 4,
**dadurch gekennzeichnet**,
daß die zweite Fläche (2) zumindest teilweise mit einer reibungsvermindernden Oberfläche, insbesondere Teflon, versehen ist.

6. Verfahren nach Anspruch 1, 2, 3, 4 oder 5,
**dadurch gekennzeichnet**,
daß die zweite Fläche (2) von einem undurchlässigen flexiblen Band gebildet wird, welches in einer bogenförmigen Bahn geführt wird und daß die erste Fläche (1) Teil eines Siebbandes (4) ist, welches gegen die zweite Fläche (2) angedrückt wird.

7. Verfahren nach Anspruch 6,
**dadurch gekennzeichnet**,
daß das Band mit einer Geschwindigkeit umlaufend bewegt wird, die wesentlich geringer als die des Siebbandes (4) ist.

8. Verfahren nach einem der voranstehenden Ansprüche,
**dadurch gekennzeichnet**,
daß der überwiegende Teil des Filtrates radial nach außen aus der Entwässerungszone (6) abgeführt wird.

9. Verfahren nach Anspruch 8,
**dadurch gekennzeichnet**,
daß das in der Entwässerungszone (6) anfallende Filtrat vollständig radial nach außen abgeführt wird.

10. Verfahren nach einem der voranstehenden Ansprüche,
**dadurch gekennzeichnet**,
daß die Faserstoffsuspension bei Einführung in den Entwässerungsspalt (5) einen Feststoffgehalt zwischen 0,3 und 2 % hat.

11. Verfahren nach einem der voranstehenden Ansprüche,
**dadurch gekennzeichnet**,
daß die durch eine der beiden Flächen (1, 2) transportierte Schicht (7) im Bereich der Entwässerungszone (6) einen Feststoffgehalt von höchstens 8 % hat.

12. Verfahren nach Anspruch 11,
**dadurch gekennzeichnet**,
daß die durch eine der beiden Flächen (1, 2) transportierte Schicht (7) im Bereich der Entwässerungszone (6) einen Feststoffgehalt von höchstens 5 % hat.

13. Verfahren nach einem der voranstehenden Ansprüche,
**dadurch gekennzeichnet**,
daß die erste Fläche (1) relativ zur zweiten Fläche (2) mit einer Geschwindigkeit von mindestens 200 m/min. bewegt wird.

14. Verfahren nach Anspruch 13,
**dadurch gekennzeichnet**,
daß die erste Fläche (1) relativ zur zweiten Fläche (2) mit einer Geschwindigkeit von mindestens 800 m/min. bewegt wird.

15. Verfahren nach einem der voranstehenden Ansprüche,
**dadurch gekennzeichnet**,
daß weitere Suspension (S') zugeführt wird, derart, daß an mindestens einer zusätzlichen Stelle der Entwässerungszone (6) eine Zufuhr durch die zweite Fläche (2) hindurch erfolgt.

16. Verfahren nach Anspruch 15,
**dadurch gekennzeichnet**,
daß die Zugabe der weiteren Suspension (S') in die Schicht (7) mit einer solchen Turbulenz erfolgt, daß die Schicht (7) weitestgehend verwirbelt wird.

17. Verfahren nach Anspruch 15,
**dadurch gekennzeichnet**,
daß die Zugabe der weiteren Suspension (S') auf die der zweiten Fläche (2) zugewandten Seite der Schicht (7) derart erfolgt, daß diese nicht verwirbelt wird, also als Filterhilfsschicht erhalten bleibt.

18. Verfahren nach einem der voranstehenden Ansprüche,
**dadurch gekennzeichnet**,
daß die Entwässerungszone (6) im wesentlichen waagerecht liegt.

19. Verfahren nach einem der Ansprüche 1 bis 17,
**dadurch gekennzeichnet**,
daß die Entwässerungszone (6) in Bewegungsrichtung (A) einen abwärts gerichteten Verlauf hat, wobei Faserstoffsuspension (S) an dem oben gelegenen Ende eingeführt wird.

20. Verfahren nach einem der voranstehenden Ansprüche,
**dadurch gekennzeichnet**,
daß die Entwässerungszone (6) die Form einer Evolvente hat.

21. Verfahren nach einem der voranstehenden Ansprüche,
**dadurch gekennzeichnet**,
daß die zweite Fläche (2) mit Längsrillen versehen ist.

22. Verfahren nach einem der voranstehenden Ansprüche,
**dadurch gekennzeichnet**,
daß die Schicht (7) auf der sie transportierenden Fläche (1, 2) nach Verlassen der Entwässerungszone (6) in einen weiteren Entwässerungsbereich geführt wird.

23. Verfahren nach einem der voranstehenden Ansprüche,
**dadurch gekennzeichnet**,
daß das durch die wasserdurchlässige Fläche (1) hindurchtretende Filtrat in wenigstens zwei Fraktionen aufgeteilt wird, und zwar in ein 1. Filtrat (F1), das in Bewegungsrichtung (A) zuerst anfällt, und in ein zweites Filtrat (F2).

24. Verfahren nach Anspruch 23,
**dadurch gekennzeichnet**,
daß das erste Filtrat (F1) zumindest teilweise auf die am konvergierenden Entwässerungsspalt (5) bereits gebildete Schicht (7) des Faserstoffes an einer Zugabestelle (3) aufgebracht wird.

25. Verfahren nach Anspruch 24,
**dadurch gekennzeichnet**,
daß die Zugabestelle (3) an der undurchlässigen Fläche (2) angeordnet ist.

26. Verfahren nach Anspruch 24 oder 25,
**dadurch gekennzeichnet**,
daß unmittelbar vor der Zugabestelle (3) der zwischen den Flächen (1, 2) liegende Raum enger und danach wieder weiter wird, so daß durch die Transportbewegung der Schicht (7) ein Injektoreffekt erzeugt wird.

27. Verfahren nach Anspruch 26,
**dadurch gekennzeichnet**,
daß die Verengung des zwischen den Flächen (1, 2) liegenden Raumes einstellbar ist.

28. Verfahren nach Anspruch 27,
**dadurch gekennzeichnet**,
daß die Verengung mit Hilfe einer schwenkbaren Klappe (8) eingestellt wird.
